(19) Europäisches Patentamt

European Patent Office

Office européen des brevets

(11) **EP 4 716 263 A1**

(12) **EUROPEAN PATENT APPLICATION**
published in accordance with Art. 153(4) EPC

(43) Date of publication:
**25.03.2026 Bulletin 2026/13**

(21) Application number: **23941910.4**

(22) Date of filing: **20.06.2023**

(51) International Patent Classification (IPC):
**H04W 12/02** (2009.01)     **G01S 13/04** (2006.01)

(52) Cooperative Patent Classification (CPC):
**H04W 12/02; G01S 13/04**

(86) International application number:
**PCT/CN2023/101544**

(87) International publication number:
**WO 2024/259606 (26.12.2024 Gazette 2024/52)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Huawei Technologies Co., Ltd.
Shenzhen, Guangdong 518129 (CN)**

(72) Inventors:
• SUN, Li
  **Shenzhen, Guangdong 518129 (CN)**
• WANG, Yuwei
  **Shenzhen, Guangdong 518129 (CN)**
• LIU, Peng
  **Shenzhen, Guangdong 518129 (CN)**
• WANG, Wenhui
  **Shenzhen, Guangdong 518129 (CN)**

(74) Representative: **Pfenning, Meinig & Partner mbB
Patent- und Rechtsanwälte
Theresienhöhe 11a
80339 München (DE)**

(54) **WIRELESS SENSING METHOD AND APPARATUS**

(57)     A wireless sensing method and an apparatus are disclosed, to protect user privacy while obtaining a wireless sensing result. The method includes: generating at least two sensing signal flows, where the at least two sensing signal flows include a first sensing signal flow and a second sensing signal flow, the first sensing signal flow is a random signal flow, and the second sensing signal flow is determined based on the first sensing signal flow and a lowpass function; and outputting the at least two sensing signal flows in each of a plurality of time units. The solution provided in embodiments of this application can protect privacy of authorized users, and has low implementation complexity.

[FIG. 3]

**Description**

TECHNICAL FIELD

This application relates to the communication field, and more specifically, to a wireless sensing method and an apparatus.

BACKGROUND

Sensing is one of important applications of a 6th generation (6th generation, 6G) mobile communication technology and next-generation wireless connectivity (wireless-fidelity, Wi-Fi). The fundamental principle of sensing is to use radio signals to measure channels, to obtain channel state information (channel state information, CSI) or a channel impulse response (channel impulse response, CIR), thereby inferring information related to the environment or a sensed object (for example, a person or an object in the environment) based on the channel state information or the channel impulse response. Special "measurement" signals (such as pilots) in wireless systems can be used for sensing, but such signals have a publicly known signal structure, which may lead to privacy exposure. Unauthorized users could potentially eavesdrop the aforementioned measurement signals, and infer positions, trajectories, behavior features, and the like of authorized users. This results in privacy leakage.

Therefore, how to protect user privacy while ensuring sensing performance is an urgent problem to be resolved currently.

SUMMARY

Embodiments of this application provide a wireless sensing method and an apparatus, to protect user privacy while ensuring sensing performance.

To achieve the foregoing objective, the following technical solutions are used in this application.

According to a first aspect, a wireless sensing method is provided. The method may be performed by a first node, or may be performed by a component of the first node, for example, a processor, a chip, or a chip system of the first node, or may be implemented by a logic module or software that can implement all or a part of functions of the first node. For example, the method may be performed by a first node. The method includes: generating at least two sensing signal flows, where the at least two sensing signal flows include a first sensing signal flow and a second sensing signal flow, the first sensing signal flow is a random signal flow, and the second sensing signal flow is determined based on the first sensing signal flow and a lowpass function; and outputting the at least two sensing signal flows in each of a plurality of time units.

In this embodiment of this application, the first node may output the at least two sensing signal flows in each of the plurality of time units. The first sensing signal flow is the random signal flow, and the second sensing signal flow is determined based on the first sensing signal flow and the lowpass function. In this way, a second node may determine a wireless sensing result based on a received signal. In one aspect, because of a lowpass feature of the lowpass function, unauthorized users cannot determine the wireless sensing result. This protects privacy of authorized users. In another aspect, in this embodiment of this application, only a group of random numbers used to determine the lowpass function needs to be shared between the first node and the second node, so that the authorized user can determine the wireless sensing result based on the signal received by the second node. Therefore, implementation complexity is low. In conclusion, in this embodiment of this application, privacy of the authorized user can be effectively protected while sensing is ensured, and implementation complexity is low.

In a possible implementation, a modulus of the first sensing signal flow remains unchanged, and a phase changes with the time unit. In this way, sensing precision can be ensured while privacy of the authorized user is protected. For example, because the modulus of the first sensing signal flow remains unchanged, and the phase changes with the time unit, channel strength may remain unchanged, and channel estimation performance may be better. In addition, a wireless sensing result is usually determined based on a channel estimation result, and a more accurate wireless sensing result may be obtained based on a better channel estimation result. Therefore, sensing precision can be ensured while privacy of the authorized user is protected.

Optionally, the first sensing signal flow is a random scalar whose modulus is any positive number and whose phase is evenly distributed from 0 to $2\pi$. This implementation is flexible, so that the modulus of the first sensing signal flow remains unchanged, and the phase changes with the time unit. In this way, sensing precision can be ensured while privacy of the authorized user is protected.

In a possible implementation, the first sensing signal flow is point in a modulation constellation set. In this implementation, the first sensing signal flow is selected from a finite set, and has low implementation complexity. When constant-modulus modulation is performed on the point in the modulation constellation set, an increase in a modulation order does not affect sensing precision. In this case, a "key space" may be increased by increasing a modulation order of the modulation constellation set, so that it is difficult for unauthorized users to obtain sensing information, and user privacy is protected. In other words, in this solution, sensing precision can be ensured while privacy of the authorized user is protected.

In a possible implementation, that the second sensing signal flow is determined based on the first sensing signal flow and the lowpass function includes: A phase of the second sensing signal flow is determined based on a sampling value of the lowpass function in a time unit for sending a sensing signal flow, and a modulus of the second sensing signal flow is equal to the modulus of the first sensing signal flow. In one aspect, the lowpass feature of the lowpass function prevents the unauthorized users from determining the wireless sensing result through lowpass filtering, so that user privacy is protected. In another aspect, moduli of the first sensing signal flow and the second sensing signal flow are equal, so that sensing precision is ensured. For example, because the modulus of the first sensing signal flow remains unchanged, and the phase changes with the time unit, channel estimation performance may be better. In addition, a wireless sensing result is usually determined based on a channel estimation result, and a more accurate wireless sensing result may be obtained based on a better channel estimation result. Therefore, sensing precision can be ensured.

Optionally, the second sensing signal flow and the first sensing signal flow satisfy the following relationship:

$$\frac{X_2[k]}{X_1[k]} = e^{j\rho}.$$

Herein, $X_1[k]$ indicates a signal of the first sensing signal flow on a k^th subcarrier, $X_2[k]$ indicates a signal of the second sensing signal flow on the k^th subcarrier, $\rho$ indicates the sampling value of the lowpass function in the time unit for sending the sensing signal flow, and k is a positive integer. Based on the foregoing solution, the second sensing signal flow may be obtained when the first sensing signal flow is determined.

Optionally, a signal of the second sensing signal flow on a k^th subcarrier is a constellation point closest to $\widetilde{X_2[k]}$ in the modulation constellation set, where $\widetilde{X_2[k]}$ satisfies the following relationship: $\frac{\widetilde{X_2[k]}}{X_1[k]} = e^{j\rho}$.

Herein, $X_1[k]$ indicates a signal of the first sensing signal flow on the k^th subcarrier, $\rho$ indicates the sampling value of the lowpass function in the time unit for sending the sensing signal flow, and k is a positive integer. Based on the foregoing solution, the second sensing signal flow may be obtained when the first sensing signal flow is determined.

Optionally, the second sensing signal flow is determined based on the first sensing signal flow, the lowpass function, and a cyclic shift diversity CSD matrix K. Based on the foregoing solution, the second sensing signal flow may be obtained when the first sensing signal flow is determined.

Optionally, that the second sensing signal flow is determined based on the first sensing signal flow, the lowpass function, and the CSD matrix K includes: The second sensing signal flow is determined based on the first sensing signal flow, a randomization matrix Ø, and K, where Ø is a diagonal matrix whose main diagonal elements are 1 and $e^{j\rho}$, and $\rho$ indicates the sampling value of the lowpass function in the time unit for sending the sensing signal flow.

For example, the second sensing signal flow satisfies the following relationship:

$$\begin{bmatrix} X_1[k] \\ X_2[k] \end{bmatrix} = \emptyset \times K \times \begin{bmatrix} X_1[k] \\ X_1[k] \end{bmatrix}.$$

Herein, $X_1[k]$ indicates a signal of the first sensing signal flow on a k^th subcarrier, and $X_2[k]$ indicates a signal of the second sensing signal flow on the k^th subcarrier. The second sensing signal flow may be obtained by adding a Ø module before an existing CSD module, and has low implementation complexity.

For example, the second sensing signal flow satisfies the following relationship:

$$\begin{bmatrix} X_1[k] \\ X_2[k] \end{bmatrix} = K \times \emptyset \times \begin{bmatrix} X_1[k] \\ X_1[k] \end{bmatrix}.$$

Herein, $X_1[k]$ indicates a signal of the first sensing signal flow on a k^th subcarrier, and $X_2[k]$ indicates a signal of the second sensing signal flow on the k^th subcarrier. The second sensing signal flow may be obtained by adding a Ø module after an existing CSD module, and has low implementation complexity.

In a possible implementation, a parameter of the lowpass function is shared, and the parameter of the lowpass function is determined by a group of random numbers and an interpolation function. The group of random numbers are shared confidentially. In this way, the first node and the second node may determine the wireless sensing result by obtaining the group of random numbers, to reduce system overheads.

Optionally, the parameter of the lowpass function may be generated by the first node, and sent to the second node after being encrypted. Alternatively, optionally, the parameter of the lowpass function may be generated by the second node, and sent to the first node after being encrypted. Alternatively, optionally, the first node and the second node may generate a group of random numbers based on a pre-agreed parameter (for example, based on a random seed and a random number generation algorithm). Alternatively, optionally, the parameter of the lowpass function may be generated by a third-party node, and sent to the first node and the second node after being encrypted.

According to a second aspect, a wireless sensing method is provided. The method may be performed by a second node, or may be performed by a component of the second node, for example, a processor, a chip, or a chip system of the second node, or may be implemented by a logic module or software that can implement all or a part of functions of the second node. For example, the method may be performed by a second node. The method includes: receiving a plurality of sensing signal flows in a plurality of time units, where the plurality of sensing signal flows include a signal of a first sensing signal flow after channel transmission and a signal of a second sensing signal flow after channel transmission, the first sensing signal flow is a random signal flow, and the second sensing signal flow is determined based on the first sensing signal flow and a lowpass function; and processing at least two sensing signal flows received in the plurality of time units, to determine a wireless sensing result.

In this embodiment of this application, the second node may receive the at least two sensing signal flows in each of the plurality of time units. The first sensing signal flow is the random signal flow, and the second sensing signal flow is determined based on the first sensing signal flow and the lowpass function. In this way, the second node may determine the wireless sensing result based on a received signal. In one aspect, because of a lowpass feature of the lowpass function, unauthorized users cannot determine the wireless sensing result. This protects privacy of authorized users. In another aspect, in this embodiment of this application, only a group of random numbers used to determine the lowpass function needs to be shared between the first node and the second node, so that the authorized user can determine the wireless sensing result based on the signal received by the second node. Therefore, implementation complexity is low. In conclusion, in this embodiment of this application, privacy of the authorized user can be effectively protected while sensing is ensured, and implementation complexity is low.

In a possible implementation, a modulus of the first sensing signal flow remains unchanged, and a phase changes with the time unit. In this way, sensing precision can be ensured while privacy of the authorized user is protected. For example, because the modulus of the first sensing signal flow remains unchanged, and the phase changes with the time unit, channel strength may remain unchanged, and channel estimation performance may be better. In addition, a wireless sensing result is usually determined based on a channel estimation result, and a more accurate wireless sensing result may be obtained based on a better channel estimation result. Therefore, sensing precision can be ensured while privacy of the authorized user is protected.

Optionally, the first sensing signal flow is a random scalar whose modulus is any positive number and whose phase is evenly distributed from 0 to $2\pi$. This implementation is flexible, so that the modulus of the first sensing signal flow remains unchanged, and the phase changes with the time unit. In this way, sensing precision can be ensured while privacy of the authorized user is protected.

In a possible implementation, the first sensing signal flow is a point in a modulation constellation set. In this implementation, the first sensing signal flow is selected from a finite set, and has low implementation complexity. When constant-modulus modulation is performed on the point in the modulation constellation set, an increase in a modulation order does not affect sensing precision. In this case, a "key space" may be increased by increasing a modulation order of the modulation constellation set, so that it is difficult for unauthorized users to obtain sensing information, and user privacy is protected. In other words, in this solution, sensing precision can be ensured while privacy of the authorized user is protected.

In a possible implementation, that the second sensing signal flow is determined based on the first sensing signal flow and the lowpass function includes: A phase of the second sensing signal flow is determined based on a sampling value of the lowpass function in a time unit for sending a sensing signal flow, and a modulus of the second sensing signal flow is equal to the modulus of the first sensing signal flow. In one aspect, a lowpass feature of the lowpass function prevents the unauthorized users from determining the wireless sensing result through lowpass filtering, so that user privacy is protected. In another aspect, moduli of the first sensing signal flow and the second sensing signal flow are equal, so that sensing precision is ensured. For example, because the modulus of the first sensing signal flow remains unchanged, and the phase changes with the time unit, channel estimation performance may be better. In addition, a wireless sensing result is usually determined based on a channel estimation result, and a more accurate wireless sensing result may be obtained based on a better channel estimation result. Therefore, sensing precision can be ensured.

Optionally, the second sensing signal flow and the first sensing signal flow satisfy the following relationship:

$$\frac{X_2[k]}{X_1[k]} = e^{j\rho}.$$

Herein, $X_1[k]$ indicates a signal of the first sensing signal flow on a $k^{th}$ subcarrier, $X_2[k]$ indicates a signal of the second sensing signal flow on the $k^{th}$ subcarrier, $\rho$ indicates the sampling value of the lowpass function in the time unit for sending the sensing signal flow, and k is a positive integer. Based on the foregoing solution, the second sensing signal flow may be obtained when the first sensing signal flow is determined.

Optionally, a signal of the second sensing signal flow on a k$^{th}$ subcarrier is a constellation point closest to $\widehat{X_2[k]}$ in the modulation constellation set, where $\widehat{X_2[k]}$ satisfies the following relationship: $\frac{\widehat{X_2[k]}}{X_1[k]} = e^{j\rho}$ .

Herein, $X_1[k]$ indicates a signal of the first sensing signal flow on the k$^{th}$ subcarrier, $\rho$ indicates the sampling value of the lowpass function in the time unit for sending the sensing signal flow, and k is a positive integer. Based on the foregoing solution, the second sensing signal flow may be obtained when the first sensing signal flow is determined.

Optionally, the second sensing signal flow is determined based on the first sensing signal flow, the lowpass function, and a cyclic shift diversity CSD matrix K. Based on the foregoing solution, the second sensing signal flow may be obtained when the first sensing signal flow is determined.

Optionally, that the second sensing signal flow is determined based on the first sensing signal flow, the lowpass function, and the CSD matrix K includes: The second sensing signal flow is determined based on the first sensing signal flow, a randomization matrix Ø, and K, where Ø is a diagonal matrix whose main diagonal elements are 1 and $e^{j\rho}$, and $\rho$ indicates the sampling value of the lowpass function in the time unit for sending the sensing signal flow.

For example, the second sensing signal flow satisfies the following relationship:

$$\begin{bmatrix} X_1[k] \\ X_2[k] \end{bmatrix} = \emptyset \times K \times \begin{bmatrix} X_1[k] \\ X_1[k] \end{bmatrix}.$$

Herein, $X_1[k]$ indicates a signal of the first sensing signal flow on a k$^{th}$ subcarrier, and $X_2[k]$ indicates a signal of the second sensing signal flow on the k$^{th}$ subcarrier. The second sensing signal flow may be obtained by adding a Ø module before an existing CSD module, and has low implementation complexity.

For example, the second sensing signal flow satisfies the following relationship:

$$\begin{bmatrix} X_1[k] \\ X_2[k] \end{bmatrix} = K \times \emptyset \times \begin{bmatrix} X_1[k] \\ X_1[k] \end{bmatrix}.$$

Herein, $X_1[k]$ indicates a signal of the first sensing signal flow on a k$^{th}$ subcarrier, and $X_2[k]$ indicates a signal of the second sensing signal flow on the k$^{th}$ subcarrier. The second sensing signal flow may be obtained by adding a Ø module after an existing CSD module, and has low implementation complexity.

In a possible implementation, a parameter of the lowpass function is shared, and the parameter of the lowpass function is determined by a group of random numbers and an interpolation function. The group of random numbers are shared confidentially. In this way, the first node and the second node may determine the wireless sensing result by obtaining the group of random numbers, to reduce system overheads.

Optionally, the parameter of the lowpass function may be generated by the first node, and sent to the second node after being encrypted. Alternatively, optionally, the parameter of the lowpass function may be generated by the second node, and sent to the first node after being encrypted. Alternatively, optionally, the first node and the second node may generate a group of random numbers based on a pre-agreed parameter (for example, based on a random seed and a random number generation algorithm). Alternatively, optionally, the parameter of the lowpass function may be generated by a third-party node, and sent to the first node and the second node after being encrypted.

According to a third aspect, a communication apparatus is provided, to implement the foregoing methods. The communication apparatus may be the first node in the first aspect, or an apparatus, for example, a chip, included in the first node. Alternatively, the communication apparatus may be the second node in the second aspect, or an apparatus, for example, a chip, included in the second node.

The communication apparatus includes a corresponding module, unit, or means (means) for implementing the foregoing method. The module, unit, or means may be implemented by hardware, software, or hardware executing corresponding software. The hardware or the software includes one or more modules or units corresponding to the foregoing functions.

In some possible designs, the communication apparatus may include a processing module and a communication module. The communication module may include an output module (or a sending module) and an input module (or a receiving module), which are respectively configured to implement output (or sending) and input (or receiving) functions in any one of the foregoing aspects and the possible designs of the foregoing aspects. The processing module may be configured to implement a processing function in any one of the foregoing aspects and the possible designs of the foregoing aspects.

Optionally, the communication apparatus further includes a storage module, configured to store program instructions and data.

According to a fourth aspect, a communication apparatus is provided, including at least one processor. The processor is configured to run a computer program or instructions, or is configured to enable, using a logic circuit, the communication apparatus to perform the method according to any one of the foregoing aspects. The communication apparatus may be the first node in the first aspect, or an apparatus, for example, a chip, included in the first node. Alternatively, the communication apparatus may be the second node in the second aspect, or an apparatus, for example, a chip, included in the second node.

In some possible designs, the communication apparatus further includes the memory, configured to store the computer instructions and/or a configuration file of the logic circuit. Optionally, the memory and the processor are integrated together, or the memory is independent of the processor.

In a possible design, the communication apparatus further includes a communication interface, configured to input and/or output a signal.

In some possible designs, the communication interface is an interface circuit, and is configured to read and write computer instructions. For example, the interface circuit is configured to: receive computer-executable instructions (where the computer-executable instructions are stored in a memory, and may be directly read from the memory, or may be read via another component), and transmit the computer-executable instructions to the processor.

In some possible designs, the communication interface is configured to communicate with a module outside the communication apparatus.

In some possible designs, the communication apparatus may be a chip system. When the communication apparatus is the chip system, the chip system may include a chip, or may include a chip and another discrete component.

According to a fifth aspect, a communication apparatus is provided, including a logic circuit and an interface circuit. The interface circuit is configured to input information and/or output information. The logic circuit is configured to: perform the method according to any one of the foregoing aspects, and perform processing and/or generate the to-be-output information based on the input information. The communication apparatus may be the first node in the first aspect, or an apparatus, for example, a chip, included in the first node. Alternatively, the communication apparatus may be the second node in the second aspect, or an apparatus, for example, a chip, included in the second node.

According to a sixth aspect, a computer-readable storage medium is provided. The computer-readable storage medium stores a computer program or instructions, and when the computer program or the instructions are executed by a processor, the method according to any one of the foregoing aspects is performed.

According to a seventh aspect, a computer program product is provided. When the computer program product is executed by a processor, the method according to any one of the foregoing aspects is performed.

It may be understood that when the communication apparatus provided in any one of the third aspect to the eighth aspect is a chip, the foregoing sending action/function may be understood as outputting information, and the foregoing receiving action/function may be understood as inputting information.

For technical effects brought by any design scheme of the third aspect to the eighth aspect, refer to the technical effects brought by different design schemes of the first aspect or the second aspect. Details are not described herein again.

According to an eighth aspect, a communication system is provided. The communication system includes the first node according to the first aspect and the second node according to the second aspect.

BRIEF DESCRIPTION OF DRAWINGS

FIG. 1 is a diagram of an application scenario according to an embodiment of this application;
FIG. 2 is a diagram of an example of a wireless sensing method according to an embodiment of this application;
FIG. 3 is a diagram of an example of a wireless sensing method according to an embodiment of this application;
FIG. 4 is a diagram of an example of a method for obtaining a second sensing signal flow according to an embodiment of this application;
FIG. 5 is a diagram of another example of a method for obtaining a second sensing signal flow according to an embodiment of this application;
FIG. 6 is a diagram of an example of a communication apparatus according to an embodiment of this application; and
FIG. 7 is a diagram of another example of a communication apparatus according to an embodiment of this application.

DESCRIPTION OF EMBODIMENTS

In descriptions of this application, unless otherwise specified, the character "/" indicates an "or" relationship between associated objects. For example, A/B may represent A or B. "And/or" in this application merely describes an association relationship between the associated objects and indicates that three relationships may exist. For example, A and/or B may indicate the following three cases: Only A exists, both A and B exist, and only B exists, where A and B may be singular or plural.

In addition, in the descriptions of this application, "a plurality of" means two or more than two unless otherwise specified. "At least one of the following items (pieces)" or a similar expression thereof indicates any combination of these items, including a single item (piece) or any combination of a plurality of items (pieces). For example, at least one of a, b, or c may indicate: a, b, c, a and b, a and c, b and c, or a, b, and c, where a, b, and c may be singular or plural.

In addition, to clearly describe the technical solutions in embodiments of this application, terms such as first and second are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

In embodiments of this application, the word "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

It may be understood that an "embodiment" used throughout this specification means that particular features, structures, or characteristics related to embodiments are included in at least one embodiment of this application. Therefore, embodiments in the entire specification are not necessarily a same embodiment. In addition, these particular features, structures, or characteristics can be combined in one or more embodiments in any appropriate manner. It may be understood that sequence numbers of the processes do not mean execution sequences in various embodiments of this application. The execution sequences of the processes should be determined based on functions and internal logic of the processes, and should not be construed as any limitation on implementation processes of embodiments of this application.

It may be understood that, in this application, "when" and "if" mean that corresponding processing is performed in an objective situation, are not intended to limit time, do not require a determining action during implementation, and do not mean any other limitation.

It may be understood that, in some scenarios, some optional features in embodiments of this application may be independently implemented without depending on another feature, for example, a solution on which the optional features are currently based, to resolve a corresponding technical problem and achieve corresponding effect. Alternatively, in some scenarios, the optional features may be combined with other features based on requirements. Correspondingly, the apparatus provided in embodiments of this application may also correspondingly implement these features or functions. Details are not described herein.

In this application, unless otherwise specified, for same or similar parts in embodiments, refer to each other. In embodiments of this application and the implementations/methods/implementation methods in embodiments, unless otherwise specified or a logical collision occurs, terms and/or descriptions are consistent and may be mutually referenced between different embodiments and between the implementations/methods/implementation methods in embodiments. Technical features in the different embodiments and the implementations/methods/implementation methods in embodiments may be combined to form a new embodiment, implementation, method, or implementation method based on an internal logical relationship of the technical features. The following implementations of this application are not intended to limit the protection scope of this application.

For ease of understanding of the technical solutions in embodiments of this application, the following first briefly describes technologies related to this application.

1. Encryption

Specifically, a transmitter end performs randomization on a sending sequence or a signal based on a key pre-agreed on by the transmitter end and a receiver end, so that unauthorized users cannot implement accurate channel estimation. This protects privacy of authorized users.

An example is used for description. In a secure high-efficiency long training field (secure high-efficiency long training field, secure HE-LTF) technology, a transmitter end and a receiver end first share a key, and then generate, based on an advanced encryption standard (advanced encryption standard, AES) encryption algorithm, an encrypted sequence by using the key. Then, the transmitter end modulates the encrypted sequence to generate and send a pilot symbol. After receiving the pilot symbol, the receiver end performs channel estimation by using a locally generated encrypted sequence, to obtain real channel state information. It should be noted that the local encrypted sequence is generated based on the AES encryption algorithm by using a key pre-agreed on by the transmitter end and the receiver end.

In this example, unauthorized users cannot perform accurate channel estimation because unauthorized users do not know the encrypted sequence.

However, the encryption technology has great impact on sensing precision of authorized users. For example, in the secure HE-LTF technology, high-order modulation is used to increase difficulty of cracking by unauthorized users. This deteriorates channel estimation performance, and affects sensing precision.

In addition, when two receive antennas are configured for the unauthorized users, signals on the two receive antennas may be divided to cancel the encrypted pilot symbol, and a sensing algorithm is executed based on a result of the division, so that a sensing function can still be implemented. Therefore, privacy protection cannot be implemented.

2. Jamming device

Specifically, dedicated jamming (Jamming) devices are used to send jamming signals, to reduce a signal to interference plus noise ratio of unauthorized users and reduce channel estimation precision of unauthorized users.

However, the jamming device has great impact on sensing precision of authorized users.

Moreover, the introduced jamming signal can only reduce the signal to interference plus noise ratio of the unauthorized users, and deteriorate sensing performance of unauthorized users to a specific extent. However, unauthorized users can still infer information related to a sensed object from a received signal. Consequently, privacy protection cannot be implemented.

3. Signal processing

Specifically, in a signal processing method, an equivalent channel response experienced by a sent signal is a version obtained after a real channel response is obfuscated, and an obfuscation manner (or an obfuscation algorithm) is shared only between a transmitter end and a receiver end of authorized users. Unauthorized users cannot estimate the real channel response because unauthorized users do not know the obfuscation manner.

For example, in the processing method, a CSI obfuscation module may be added after an orthogonal frequency division multiplexing (orthogonal frequency division multiplexing, OFDM) modulation module of the transmitter end. For example, the CSI obfuscation module may be a finite impulse response (finite impulse response, FIR) filter. A time domain signal obtained through OFDM modulation is first processed by the CSI obfuscation module, and then sent. CSI obtained through channel estimation at the receiver end is actually a result of cascading artificial CSI introduced by the CSI obfuscation module and real CSI of a channel. The authorized user can restore the real CSI of the channel from the obfuscated CSI because the authorized user is aware of an obfuscation mode (namely, a specific implementation of the CSI obfuscation module). However, unauthorized users cannot restore the real CSI because unauthorized users do not know the obfuscation mode.

For another example, devices such as an intelligent reflective surface and a relay may be deployed in an environment. Reflecting a received signal by these devices is equivalent to introducing an artificial multipath component. As a result, CSI measured by the receiver end is inconsistent with real CSI. The receiver end can restore the real CSI of a channel because the receiver end is aware of a manner of introducing an artificial multipath. However, unauthorized users cannot restore the real CSI because unauthorized users do not know the manner of introducing the artificial multipath.

However, the signal processing solution requires additional hardware or processing units, and has high implementation complexity.

Due to disadvantages of the foregoing wireless sensing privacy protection technology, embodiments of this application provide a wireless sensing method and an apparatus. Detailed descriptions are provided below.

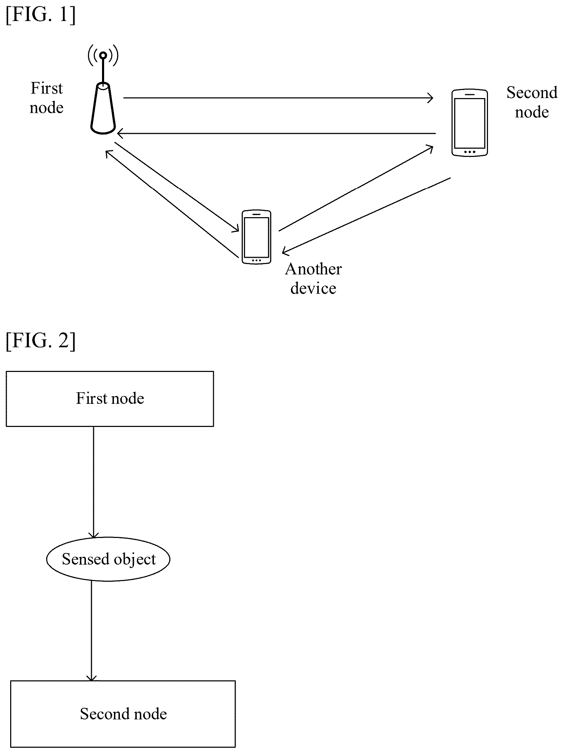

FIG. 1 is a diagram of an application scenario according to an embodiment of this application. As shown in FIG. 1, an embodiment of this application provides a communication system. The communication system includes a first node and a second node. The first node and the second node communicate with each other to implement wireless sensing.

For example, this embodiment of this application may be used in a plurality of wireless sensing scenarios, for example, physiological feature monitoring applications such as breathing detection and heart rate detection, smart home monitoring applications such as presence detection, life and health feature monitoring applications such as fall detection, security monitoring applications such as intrusion detection, or applications related to environment reconstruction. This is not specifically limited in embodiments of this application.

For example, the first node or the second node in this embodiment of this application may be a device having a capability of receiving and sending a radio frequency signal, for example, a base station, an AP, or a user terminal.

For example, the first node in this embodiment of this application may alternatively be referred to as a sending node, and the second node in this embodiment of this application may alternatively be referred to as a receiving node. This is not specifically limited in embodiments of this application.

When the first node or the second node is used as a sending node, in a possible implementation, the sending node may include a processor and a transceiver. The processor is configured to: process a signal and output a processed signal, and the transceiver is configured to send the processed signal processed by the processor. In another possible implementation, the sending node includes a processor that is configured to output a signal. The sending node is coupled or linked to an external transceiver, and is configured to send a processed signal.

For example, the sending node in this embodiment of this application may include one or more transmitters, each transmitter may be equipped with one or more antennas, and the sending node may jointly send a plurality of signals through the one or more antennas of the one or more transmitters.

For example, the receiving node in this embodiment of this application may include one or more receivers, and each receiver may be equipped with one or more antennas. The receiving node may jointly receive a plurality of signals through the one or more antennas of the one or more receivers, or may receive one signal through one antenna of the one or more receivers.

It should be noted that, in this embodiment of this application, one signal may include a plurality of signal flows, and one signal flow is a signal that can carry one channel of independent information.

The sending node and the receiving node in this application may be various terminal devices. A terminal may be user equipment (user equipment, UE), an access terminal, a terminal unit, a user station, a terminal station, a mobile station, a mobile console, a remote station, a remote terminal, a user terminal (terminal equipment, TE), a mobile device, a wireless communication device, a terminal agent, a tablet computer (pad), a handheld device having a wireless communication function, a computing device, another processing device connected to a wireless modem, a vehicle-mounted device, a vehicle-mounted transceiver unit, a wearable device, or a terminal apparatus in a 5th generation (5th generation, 5G) mobile communication technology network or a public land mobile network (public land mobile network, PLMN) evolved after 5G. An access terminal may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, an uncrewed aerial vehicle, a robot, a smart point of sale (point of sale, POS) machine, customer-premises equipment (customer-premises equipment, CPE), a wearable device, a virtual reality (virtual reality, VR) terminal device, an augmented reality (augmented reality, AR) terminal device, a wireless terminal in industrial control (industrial control), a wireless terminal in self driving (self driving), a wireless terminal in remote medical (remote medical), a wireless terminal in smart grid (smart grid), a wireless terminal in transportation safety (transportation safety), a wireless terminal in smart city (smart city), a wireless terminal in smart home (smart home), or the like. Alternatively, the terminal may be a terminal having a communication function in internet of things (internet of things, IoT), for example, a terminal (for example, an internet of vehicles device) in V2X, a terminal in D2D communication, or a terminal in M2M communication. The terminal may be movable or fixed.

The transmitter and the receiver in this application may alternatively be various types of network devices or access devices in a communication system, namely, devices configured to communicate with the terminal device, for example, may include an evolved NodeB (NodeB or eNB or e-NodeB, evolved NodeB) in a long term evolution (long term evolution, LTE) system or an LTE-advanced (LTE-advanced, LTE-A) system, for example, a conventional macro base station eNB and a micro base station eNB in a heterogeneous network scenario; or may include a next generation NodeB (next generation NodeB, gNB) in a new radio (new radio, NR) system; or may include a transmission reception point (transmission reception point, TRP), a home base station (for example, a home evolved NodeB or a home NodeB, HNB), a baseband unit (baseband unit, BBU), a baseband pool (BBU pool), a wireless fidelity (wireless fidelity, Wi-Fi) access point (access point, AP), or the like; or may include a base station in a non-terrestrial network (non-terrestrial network, NTN), that is, may be deployed on an airplane platform or a satellite. In the NTN, the network device or the access device may be used as a layer 1 (L1) relay (relay), may be used as a base station, or may be used as an integrated access and backhaul (integrated access and backhaul, IAB) node. Alternatively, the network device or the access device may be a device that is in an IoT and that implements functions of a base station, for example, a device that is in uncrewed aerial vehicle communication, V2X, D2D, or machine-to-machine (machine-to-machine, M2M) and that implements the functions of the base station.

In some possible scenarios, the network device or the access device may alternatively be a module or unit that can implement a part of functions of a base station. For example, the network device or the access device may be a central unit (central unit, CU), a distributed unit (distributed unit, DU), a CU-control plane (control plane, CP), a CU-user plane (user plane, UP), a radio unit (radio unit, RU), or the like. The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may alternatively have different names, but a person skilled in the art may understand meanings of the names. For example, the network device or the access device may be a network device in an open radio access network (open RAN, ORAN) system or a module of the network device. In an ORAN system, a CU may also be referred to as an open (open, O) CU, a DU may also be referred to as an O-DU, a CU-CP may also be referred to as an O-CU-CP, a CU-UP may also be referred to as an O-CU-UP, and an RU may also be referred to as an O-RU. Any one of the CU (or the CU-CP and the CU-UP), the DU, and the RU in this application may be implemented by using a software module, a hardware module, or a combination of a software module and a hardware module.

Optionally, the base station in embodiments of this application may include various forms of base stations, for example, a macro base station, a micro base station (or referred to as a small cell), a relay station, an access point, a home base station, a TRP, a transmitting point (transmitting point, TP), or a mobile switching center. This is not specifically limited in embodiments of this application.

The wireless sensing method provided in this application is implemented by using program code in a memory. The wireless sensing method on a base station side, an AP side, or the like is run in a processing chip in a base station or an AP, any apparatus having communication, computing, and storage functions, or any processing device mounted on the base station side or the AP side. The wireless sensing method on a terminal side (for example, a mobile phone, a tablet, an intelligent terminal, or an intelligent tag) is run in a built-in processing chip in the terminal, or any apparatus having communication, computing, and storage functions.

FIG. 2 is a diagram of an example of a wireless sensing method according to an embodiment of this application. Execution entities include a first node and a second node.

It should be understood that the first node in this embodiment of this application includes a plurality of antennas, and the first node may send a plurality of sensing signal flows.

The second node in this embodiment of this application may include a single antenna, or may include a plurality of antennas. The second node may receive a signal through the single antenna, or may receive a signal through the plurality of antennas. This is not limited in embodiments of this application.

As shown in FIG. 2, in the wireless sensing method provided in this embodiment of this application, the first node sends a signal to the second node in at least two time units, and the second node receives, in the at least two time units, the signal sent by the first node.

Steps performed on a first node side in the wireless sensing method mainly include the following steps.

(1) Generate at least two sensing signal flows.
(2) Output the at least two sensing signal flows in each of a plurality of time units.

Steps performed on a second node side in the wireless sensing method mainly include the following steps.

(1) Receive at least two sensing signal flows in each of a plurality of time units.
(2) Process the at least two sensing signal flows received in the plurality of time units, to determine a wireless sensing result.

In this embodiment of this application, the first node includes a plurality of antennas. A case in which the first node includes a single antenna to implement the solution provided in this application is not limited in this application.

In this embodiment of this application, a time unit may be a slot, or may be any time unit that is specified in the future and that is used for signal transmission. This is not limited in embodiments of this application.

In this embodiment of this application, determining the wireless sensing result may be obtaining a channel quality parameter (for example, CSI or CIR) and determining the wireless sensing result based on the channel quality parameter, or may be determining the wireless sensing result in another manner. This is not limited in this application.

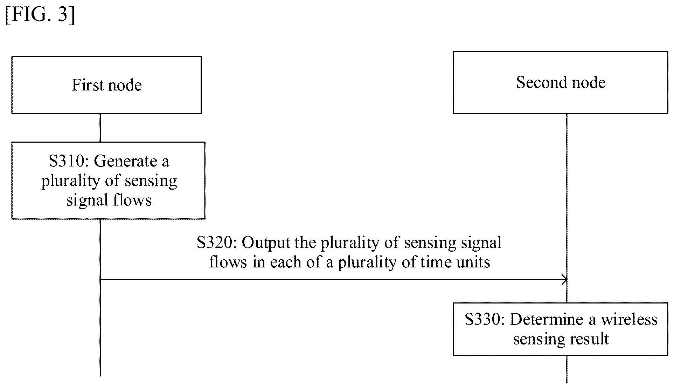

For example, as shown in FIG. 3, the wireless sensing method according to this embodiment of this application includes the following steps.

S310: A first node generates at least two sensing signal flows.

The at least two sensing signal flows include a first sensing signal flow and a second sensing signal flow, the first sensing signal flow is a random signal flow, and the second sensing signal flow is determined based on the first sensing signal flow and a lowpass function.

Optionally, the at least two sensing signal flows in this embodiment of this application may be jointly sent through a plurality of antennas included in the first node to a second node. For example, each of the plurality of antennas sends one sensing signal flow, and the first sensing signal flow and the second sensing signal flow are from different antennas of the first node.

For example, in this embodiment of this application, the first sensing signal flow may be a signal flow whose modulus remains unchanged and whose phase changes with a time unit. This ensures sensing precision while protecting authorized users' privacy. For example, because the modulus of the first sensing signal flow remains unchanged, and the phase changes with the time unit, channel strength may remain unchanged, and channel estimation performance may be better. In addition, a wireless sensing result is usually determined based on a channel estimation result, and a more accurate wireless sensing result may be obtained based on a better channel estimation result. Therefore, sensing precision can be ensured while privacy of the authorized user is protected.

In a possible implementation, the first sensing signal flow may be a random scalar whose modulus is any positive number and whose phase is evenly distributed from $0$ to $2\pi$. The first sensing signal flow and the second sensing signal flow are more flexible, so that the modulus of the first sensing signal flow remains unchanged and the phase changes with the time unit. In a constant modulus case, channel strength remains unchanged, and channel estimation performance is good, so that sensing precision can be improved, and privacy of the authorized user can be protected.

In another possible implementation, the first sensing signal flow may be a point in a modulation constellation set. In this implementation, the first sensing signal flow is selected from a finite set, and has low implementation complexity. Optionally, the modulation constellation set may be a constant-modulus modulation constellation set, for example, may be a phase shift keying (phase shift keying, PSK) constellation set, for example, 8PSK, 16PSK, or 64PSK. When constant-modulus modulation is performed on the point in the modulation constellation set, an increase in a modulation order does not affect sensing precision. In this case, a "key space" may be increased by increasing a modulation order of the modulation constellation set, so that it is difficult for unauthorized users to obtain sensing information, and user privacy is protected. The modulation constellation set may alternatively be a quadrature amplitude modulation (quadrature amplitude QAM) constellation set, for example, 16QAM or 64QAM. This is not limited in embodiments of this application.

Optionally, in this embodiment of this application, the second sensing signal flow may be determined based on the first sensing signal flow and a lowpass function $\theta_k(t)$. The lowpass function $\theta_k(t)$ may change with time, and therefore may also be referred to as a time-varying function or a time-varying function that slowly changes with time. This is not specifically limited in embodiments of this application.

For example, a phase of the second sensing signal flow is determined based on a sampling value of the lowpass function $\theta_k(t)$ in a time unit for sending a sensing signal flow, and a modulus of the second sensing signal flow is equal to the modulus of the first sensing signal flow. In one aspect, the lowpass feature of the lowpass function prevents unauthorized users from determining the wireless sensing result through lowpass filtering, so that user privacy is protected. In another aspect, moduli of the first sensing signal flow and the second sensing signal flow are equal, so that sensing precision is ensured. For example, because the modulus of the first sensing signal flow remains unchanged, and the phase changes with the time unit, channel strength may remain unchanged, and channel estimation performance may be better. In addition, a wireless sensing result is usually determined based on a channel estimation result, and a more accurate wireless sensing result may be obtained based on a better channel estimation result. Therefore, sensing precision can be ensured.

The lowpass feature of the lowpass function may be that a threshold of the lowpass function is less than a first threshold. This is not limited in embodiments of this application.

In a possible implementation, the first sensing signal flow and the second sensing signal flow in this embodiment of this application satisfy the following relationship: $\frac{X_2[k]}{X_1[k]} = e^{j\rho}$ .

Herein, $X_1[k]$ indicates a signal of the first sensing signal flow on a $k^{th}$ subcarrier, $X_2[k]$ indicates a signal of the second sensing signal flow on the $k^{th}$ subcarrier, $\rho$ indicates the sampling value of the lowpass function $\theta_k(t)$ in the time unit for sending the sensing signal flow, and k is a positive integer. The foregoing relationship may be used to obtain the second sensing signal flow when the first sensing signal flow is determined.

In another possible implementation, a signal of the second sensing signal flow on a $k^{th}$ subcarrier is a constellation point closest to $\widehat{X_2[k]}$ in the modulation constellation set, where $\widehat{X_2[k]}$ satisfies the following relationship: $\frac{\widehat{X_2[k]}}{X_1[k]} = e^{j\rho}$ .

Herein, $X_1[k]$ indicates a signal of the first sensing signal flow on the $k^{th}$ subcarrier, $\rho$ indicates the sampling value of the lowpass function $\theta_k(t)$ in the time unit for sending the sensing signal flow, and k is a positive integer. The foregoing relationship may be used to obtain the second sensing signal flow when the first sensing signal flow is determined.

Optionally, in this embodiment of this application, that the second sensing signal flow may be determined based on the first sensing signal flow and the lowpass function $\theta_k(t)$ includes: The second sensing signal flow is determined based on the first sensing signal flow, the lowpass function $\theta(t)$, and a cyclic shift diversity (cyclic shift diversity, CSD) matrix K. The second sensing signal flow may be obtained when the first sensing signal flow is determined.

For example, the second sensing signal flow is determined based on the first sensing signal flow, a randomization matrix Ø, and K. Herein, Ø may be a diagonal matrix whose main diagonal elements are 1 and $e^{j\rho}$. $\rho$ indicates the sampling value of the lowpass function $\theta_k(t)$ in the time unit for sending the sensing signal flow, and k is a positive integer.

For example, the diagonal matrix may be in the following form: $\begin{bmatrix} 1 & 0 \\ 0 & e^{j\rho} \end{bmatrix}$ .

For another example, the diagonal matrix may be in the following form: $\begin{bmatrix} e^{j\rho} & 0 \\ 0 & 1 \end{bmatrix}$ .

It should be noted that a form of the diagonal matrix including 1 and $e^{j\rho}$ is not limited in embodiments of this application.

When the second sensing signal flow is determined based on the first sensing signal flow, the randomization matrix Ø, and K, in a possible implementation, the second sensing signal flow in this embodiment of this application satisfies the following relationship:

$$\begin{bmatrix} X_1[k] \\ X_2[k] \end{bmatrix} = K \times \emptyset \times \begin{bmatrix} X_1[k] \\ X_1[k] \end{bmatrix}.$$

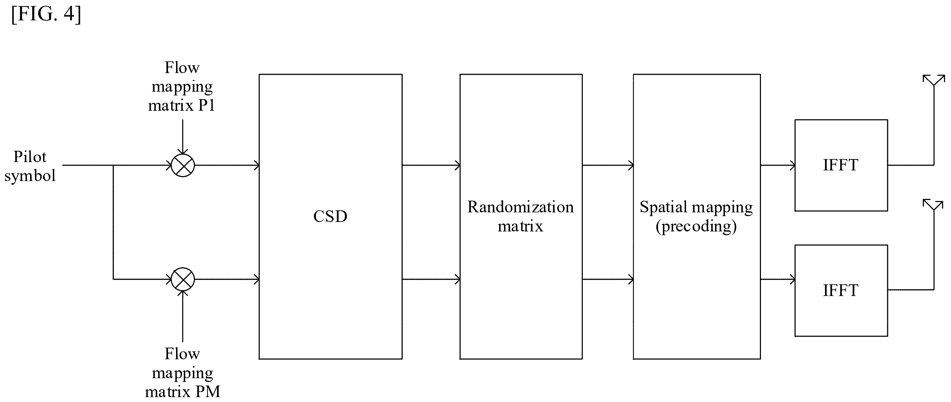

FIG. 4 shows an example of a method for obtaining the second sensing signal flow through CSD matrix transformation according to an embodiment of this application. As shown in FIG. 4, a vector $\begin{bmatrix} X_1[k] \\ X_1[k] \end{bmatrix}$ formed by two replicas of a first signal flow is sequentially processed by using a CSD transformation matrix K and the randomization matrix Ø, to obtain two to-be-sent signal flows. The two to-be-sent signal flows are represented by $\begin{bmatrix} X_1[k] \\ X_2[k] \end{bmatrix}$.

For example, the vector $\begin{bmatrix} X_1[k] \\ X_1[k] \end{bmatrix}$ formed by the two replicas of the first signal flow may be obtained after a pilot symbol passes through a flow mapping matrix P1 and the pilot symbol passes through a flow mapping matrix PM.

Optionally, spatial mapping and IFFT may be further performed on the two to-be-sent signal flows $\begin{bmatrix} X_1[k] \\ X_2[k] \end{bmatrix}$ to generate the first sensing signal flow and the second sensing signal flow.

The second sensing signal flow may be obtained by adding a Ø module before an existing CSD module, and has low implementation complexity.

When the second sensing signal flow is determined based on the first sensing signal flow, the randomization matrix Ø, and K, in another possible implementation, the second sensing signal flow in this embodiment of this application satisfies the following relationship:

$$\begin{bmatrix} X_1[k] \\ X_2[k] \end{bmatrix} = \emptyset \times K \times \begin{bmatrix} X_1[k] \\ X_1[k] \end{bmatrix}.$$

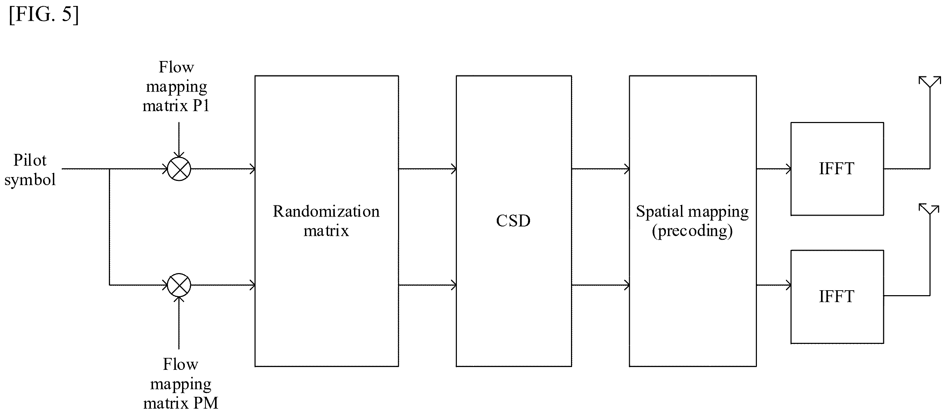

FIG. 5 shows another example of a method for obtaining the second sensing signal flow through CSD matrix transformation according to an embodiment of this application. As shown in FIG. 5:

A vector $\begin{bmatrix} X_1[k] \\ X_1[k] \end{bmatrix}$ formed by two replicas of a first signal flow is sequentially processed by using the randomization matrix Ø and a CSD transformation matrix K, to obtain two to-be-sent signal flows. The two to-be-sent signal flows are represented by $\begin{bmatrix} X_1[k] \\ X_2[k] \end{bmatrix}$.

For example, the vector $\begin{bmatrix} X_1[k] \\ X_1[k] \end{bmatrix}$ formed by the two replicas of the first signal flow may be obtained after a pilot symbol passes through a flow mapping matrix P1 and the pilot symbol passes through a flow mapping matrix PM.

Optionally, spatial mapping and IFFT may be further performed on the two to-be-sent signal flows $\begin{bmatrix} X_1[k] \\ X_2[k] \end{bmatrix}$ to generate the first sensing signal flow and the second sensing signal flow.

The second sensing signal flow may be obtained by adding a Ø module after an existing CSD module, and has low implementation complexity.

S320: The first node outputs the at least two sensing signal flows in each of the plurality of time units, and correspondingly, the second node receives at least two sensing signal flows from the first node in each time unit.

It should be understood that the at least two sensing signal flows received by the second node from the first node are signals obtained by transmitting, through a channel, the at least two sensing signal flows output by the first node.

For ease of differentiation and description, it is assumed that the at least two sensing signal flows output by the first node are the first sensing signal flow and the second sensing signal flow, and the at least two sensing signal flows received by the second node from the first node are a third sensing signal flow and a fourth sensing signal flow.

It should be understood that the third sensing signal flow is a signal obtained by transmitting the first sensing signal flow through the channel, and the fourth sensing signal flow is a signal obtained by transmitting the second sensing signal flow through the channel.

The third sensing signal flow and the fourth sensing signal flow are not sensing signal flows actually received on antennas included in the second node. Instead, the antennas process received signals, and this may be equivalent to receiving the third sensing signal flow and the fourth sensing signal flow. Processing performed by the antenna of the second node is not specifically described in this embodiment of this application.

In a possible implementation, the first sensing signal flow and the second sensing signal flow that are sent by the first node in different time units are different. In a same time unit, the first sensing signal flow and the second sensing signal flow meet the foregoing relationship. However, a first sensing signal flow and a second sensing signal flow that correspond to a first time unit are different from a first sensing signal flow and a second sensing signal flow that correspond to a second time unit. For example, it is assumed that the first sensing signal flow output by the first node in the first time unit is $X_{11}[k]$, the second sensing signal flow output by the first node in the first time unit is $X_{12}[k]$, the first sensing signal flow output by the first node in the second time unit is $X_{21}[k]$, and the second sensing signal flow output by the first node in the second time unit is $X_{22}[k]$.

S330: The second node processes the at least two sensing signal flows received in the plurality of time units, to determine a wireless sensing result.

For example, the second node receives two sensing signal flows in the first time unit and the second time unit, determines a channel quality parameter (for example, CSI or a CIR), and determines the wireless sensing result based on the channel quality parameter.

For example, a signal received by the second node may be in the following form:

$$Y_1[k] = X_{11}[k]H_1[k] + X_{12}[k]H_2[k] + W_1[k] \text{ and } Y_2[k] = X_{21}[k]H_1[k] + X_{22}[k]H_2[k] + W_2[k].$$

Herein, $Y_1[k]$ indicates a signal received by the second node in the first time unit, $Y_2[k]$ indicates a signal received by the second node in the second time unit, $H_1[k]$ indicates a frequency-domain channel coefficient from a first transmit antenna to a receive antenna on the $k^{th}$ subcarrier, $H_2[k]$ indicates a frequency-domain channel coefficient from a second transmit antenna to the receive antenna on the $k^{th}$ subcarrier, and $W_1[k]$ and $W_2[k]$ are receiver thermal noise.

Further, the second node estimates channel state information CSI based on the foregoing equation set.

Further, the second node determines the wireless sensing result based on the CSI.

In this embodiment of this application, an example in which unauthorized users include two antennas is used for description. Certainly, the unauthorized users may alternatively include more than two antennas. This is not limited in embodiments of this application. It should be understood that the unauthorized users may receive a signal in any time unit. The any time unit may include the first time unit or the second time unit, or may be a time unit other than the time unit for sending the first sensing signal flow and the second sensing signal flow. $R_{e1} = X_{11}H_{t1e1} + X_{12}H_{t2e1}$ and $R_{e2} = X_{11}H_{t1e2} + X_{12}H_{t2e2}$.

Herein, $R_{e1}$ indicates a signal received by a first antenna of the unauthorized users, $R_{e2}$ indicates a signal received by a second antenna of the unauthorized users, $H_{t1e1}$ indicates a frequency-domain channel coefficient from the first antenna of the first node to the first antenna of the unauthorized users, $H_{t2e1}$ indicates a frequency-domain channel coefficient from the second antenna of the first node to the first antenna of the unauthorized users, $H_{t1e2}$ indicates a frequency-domain channel coefficient from the first antenna of the first node to the second antenna of the unauthorized users, and $H_{t2e2}$ indicates a frequency-domain channel coefficient from the second antenna of the first node to the second antenna of the unauthorized users.

It should be noted that a subcarrier sequence number is omitted herein, and noise impact is ignored.

Both $X_{11}$ and $X_{12}$ are unknown to the unauthorized users. Therefore, the unauthorized users cannot determine the wireless sensing result based on the received signals $R_{e1}$ and $R_{e2}$ on the two antennas.

The following analyzes a design reason of the lowpass function $\theta_k(t)$.

The unauthorized users may obtain the wireless sensing result by jointly processing the received signals on the two antennas.

If $\frac{H_{t2e1}}{H_{t1e1}} = a_1 e^{j\theta_1}$, $\frac{H_{t2e2}}{H_{t1e2}} = a_2 e^{j\theta_2}$, and $\frac{X_{12}}{X_{11}} = e^{j\theta}$, the following relationship

$\frac{R_{e2}}{R_{e1}} = \frac{X_{11}H_{t1e2}(1+e^{j\theta}a_2 e^{j\theta_2})}{X_{11}H_{t1e1}(1+e^{j\theta}a_1 e^{j\theta_1})}$ may be obtained.

Therefore, the following relationship $\frac{|R_{e2}|}{|R_{e1}|} = \frac{|H_{t1e2}|}{|H_{t1e1}|}\sqrt{\frac{(1+a_2^2+2a_2\cos(\theta+\theta_2))}{(1+a_1^2+2a_1\cos(\theta+\theta_1))}}$ and

$$\varphi\left(\frac{R_{e2}}{R_{e1}}\right) = \varphi\left(\frac{H_{t1e2}}{H_{t1e1}}\right) + \tan^{-1}\frac{a_2\sin(\theta+\theta_2)}{1+a_2\cos(\theta+\theta_2)} - \tan^{-1}\frac{a_1\sin(\theta+\theta_1)}{1+a_1\cos(\theta+\theta_1)}$$ are obtained.

In an actual system, $a_1$, $\theta_1$, $a_2$, and $\theta_2$ are based on an environment, and their variations are small and uncontrollable. In most scenarios, channel fluctuation caused by a sensed object is slow. Therefore, to obfuscate unauthorized users and prevent them from correctly inferring a variation pattern of an equivalent channel to implement a sensing function, $\theta_k(t)$ needs to be designed as a slowly varying function with a lowpass feature (if the change is fast, the unauthorized users may remove the effect of the function through lowpass filtering). In other words, the variation pattern of $\theta_k(t)$ is used to mask the true variation pattern of the channel.

In some embodiments, the sampling value $\rho$ of the lowpass function $\theta_k(t)$ in embodiments of this application may be a random number evenly distributed from 0 to $2\pi$.

For example, a specific example of an algorithm for generating the lowpass function $\theta_k(t)$ is provided.

It should be understood that the algorithm in this embodiment of this application is merely a specific example of the lowpass function $\theta_k(t)$, and the algorithm for generating the lowpass function $\theta_k(t)$ is not limited in embodiments of this application.

The algorithm may include the following steps.

Step 1: Define a lowpass function $\theta_k(t)$ for any subcarrier k. It is assumed that an entire sensing process includes S rounds, where S is greater than or equal to 1, each round lasts for a duration of T, where T is greater than 0. Therefore, the total duration of the sensing process is ST, and ST may serve as a time duration of $\theta_k(t)$.

For example, one round is the time during which the first node sends a sensing signal flow to the second node and the second node receives the sensing signal flow.

Step 2: Randomly generate M evenly distributed random numbers ranging from 0 to $2\pi$ for any subcarrier k, where a time interval corresponding to adjacent random numbers is ST/M. In this way, the M generated random numbers are sampling values of $\theta_k(t)$ at moments of 0, ST/M, ..., and (M-1)*ST/M.

Step 3: Perform interpolation on the sampling values by using a segmented interpolation method (for example, a cubic Hermite interpolation algorithm) to obtain $\theta_k(t)$.

If $\theta_k(t) > 2\pi$, $\theta_k(t) = 2\pi$ is set. If $\theta_k(t) < 0$, $\theta_k(t) = 0$ is set.

Step 4: Perform sampling on $\theta_k(t)$ at an interval of T to obtain a group of samples $\theta_k(nT)$, where n=0, 1, ..., S-1.

$\theta$ used in an n$^{th}$ round of sensing is equal to $\theta_k(nT)$.

It can be learned from the foregoing example that the lowpass function may be determined by a group of random numbers and an interpolation function, and the group of random numbers are confidentially shared between the first node and the second node.

Optionally, the first node may generate a group of random numbers, and send the group of random numbers to the second node after encryption. Alternatively, optionally, the second node may generate a group of random numbers, and send the group of random numbers to the first node after encryption. Alternatively, optionally, the first node and the second node may generate a group of random numbers based on a pre-agreed random seed and a random number generation algorithm. Alternatively, optionally, a third-party node sends an encrypted group of random numbers to the first node and the second node.

For example, the interpolation function is a public function.

It should be noted that the foregoing algorithm is merely a specific algorithm of the lowpass function $\theta_k(t)$, and $\theta_k(t)$ may alternatively be determined by using another algorithm.

In a possible implementation, in the first time unit for outputting the first sensing signal flow and the second sensing signal flow, $\theta_k(t)$ may meet a relationship $\theta1_k(t)$, and in the second time unit for outputting the first sensing signal flow and the second sensing signal flow, $\theta_k(t)$ may meet a relationship $\theta2_k(t)$. That is, lowpass functions meet different rules in the first time unit and the second time unit, and are two different lowpass functions.

In another possible implementation, in the first time unit and the second time unit for outputting the first sensing signal flow and the second sensing signal flow, the lowpass functions meet a same rule, and are a same lowpass function.

In this embodiment of this application, the first node may output the at least two sensing signal flows in each of the plurality of time units. The first sensing signal flow is the random signal flow, and the second sensing signal flow is determined based on the first sensing signal flow and the lowpass function. In this way, a second node may determine a wireless sensing result based on a received signal. In one aspect, because of a lowpass feature of the lowpass function, unauthorized users cannot determine the wireless sensing result. This protects privacy of authorized users. In another aspect, in this embodiment of this application, only a group of random numbers used to determine the lowpass function needs to be shared between the first node and the second node, so that the authorized user can determine the wireless sensing result based on the signal received by the second node. Therefore, implementation complexity is low. In conclusion, in this embodiment of this application, privacy of the authorized user can be effectively protected while sensing is ensured, and implementation complexity is low.

It may be understood that, in the foregoing embodiments, the methods and/or steps implemented by the first node may alternatively be implemented by a component (for example, a processor, a chip, a chip system, a circuit, a logic module, or software such as a chip or a circuit) that can be used in the first node. The methods and/or steps implemented by the second node may alternatively be implemented by a component (for example, a processor, a chip, a chip system, a circuit, a logic module, or software such as a chip or a circuit) that can be used in the second node.

The foregoing mainly describes the solutions provided in this application from the perspective of interaction between devices. Correspondingly, this application further provides a communication apparatus, and the communication apparatus is configured to implement the foregoing methods. The communication apparatus may be the first node in the foregoing method embodiments, an apparatus including the first node, or a component that can be used in the first node, for example, a chip in the first node. Alternatively, the communication apparatus may be the second node in the foregoing method embodiments, an apparatus including the second node, or a component that can be used in the second node, for example, a chip in the second node.

It may be understood that, to implement the foregoing functions, the communication apparatus includes a hardware structure and/or a software module for performing a corresponding function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of software functional module. It should be noted that, in embodiments of this application, module division is an example, and is merely a logical function division. During actual implementation, another division manner may be used.

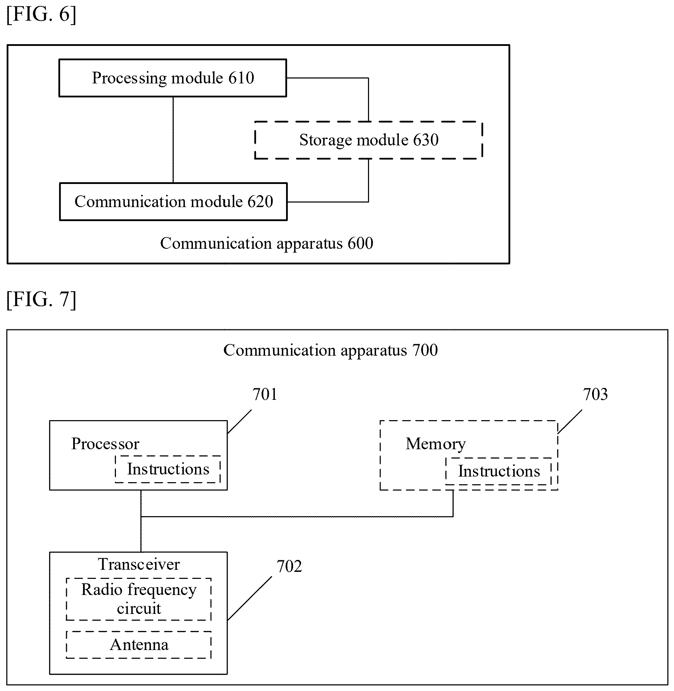

FIG. 6 is a diagram of an example of a communication apparatus according to an embodiment of this application. The communication apparatus 600 includes a communication module 610 and a processing module 620. Optionally, the communication apparatus further includes a storage module 630. The communication module 610 may communicate with the outside, and the processing module 620 is configured to process data. The communication module 610 may alternatively be referred to as a communication interface or a communication unit.

Optionally, the communication apparatus 600 may further include a storage module, the storage module may be configured to store instructions and/or data, and the processing module 620 may read the instructions and/or the data in the storage module.

In some embodiments, the communication module 610 is configured to implement an output and/or input function, and the communication module 610 may include a communication interface. Optionally, the communication module 610 may be a transceiver module (or referred to as a communication unit) configured to implement a sending and/or receiving function. In this case, the communication module 610 may be an input/output interface, a transceiver circuit, a transceiver, or a transceiver machine.

In some embodiments, the communication module 610 may include an output module (or a receiving module) and an input module (or a sending module), which are respectively configured to perform output (or receiving) and input (or sending) steps performed by the first node or the second node in the foregoing method embodiments, and/or configured to support another process of the technology described in this specification. The processing module 620 may be configured to perform processing (for example, determining and generation) steps performed by the first node or the second node in the foregoing method embodiments, and/or configured to support another process of the technology described in this specification.

For example, the communication apparatus is the first node in the foregoing method embodiments, an apparatus including the first node, or a component that can be used in the first node. The processing module 620 is configured to generate at least two sensing signal flows. The at least two sensing signal flows include a first sensing signal flow and a second sensing signal flow, the first sensing signal flow is a random signal flow, and the second sensing signal flow is determined based on the first sensing signal flow and a lowpass function. The communication module 610 is configured to output a plurality of sensing signal flows in each of a plurality of time units.

For example, a modulus of the first sensing signal flow remains unchanged, and a phase changes with the time unit. In a constant modulus case, channel strength remains unchanged, and channel estimation performance is good, so that sensing precision can be improved.

In a possible implementation, the first sensing signal flow may be a random scalar whose modulus is any positive number and whose phase is evenly distributed from 0 to $2\pi$. The first sensing signal flow and the second sensing signal flow are flexible, so that the modulus of the first sensing signal flow remains unchanged and the phase changes with the time unit. In a constant modulus case, channel strength remains unchanged, and channel estimation performance is good, so that sensing precision can be improved, and privacy of the authorized user can be protected.

In another possible implementation, the first sensing signal flow may be a point in a modulation constellation set. In this implementation, the first sensing signal flow is selected from a finite set, and has low implementation complexity. Optionally, the modulation constellation set may be a constant-modulus modulation constellation set, for example, may be a PSK constellation set, for example, 8PSK, 16PSK, or 64PSK. When constant-modulus modulation is performed on the point in the modulation constellation set, an increase in a modulation order does not affect sensing precision. In this case, a "key space" may be increased by increasing a modulation order of the modulation constellation set, so that it is difficult for unauthorized users to obtain sensing information, and user privacy is protected. The modulation constellation set may alternatively be a QAM constellation set, for example, 16QAM or 64QAM. This is not limited in embodiments of this application.

Optionally, in this embodiment of this application, the second sensing signal flow may be determined based on the first sensing signal flow and a lowpass function $\theta_k(t)$. The lowpass function $\theta_k(t)$ may also be referred to as a time-varying function or a time-varying function that slowly changes with time. This is not specifically limited in embodiments of this application.

For example, a phase of the second sensing signal flow is determined based on a sampling value of the lowpass function $\theta_k(t)$ in a time unit for sending a sensing signal flow, and a modulus of the second sensing signal flow is equal to the modulus of the first sensing signal flow.

In a possible implementation, the first sensing signal flow and the second sensing signal flow in this embodiment of this application satisfy the following relationship: $\dfrac{X_2[k]}{X_1[k]} = e^{j\rho}$.

Herein, $X_1[k]$ indicates a signal of the first sensing signal flow on a $k^{th}$ subcarrier, $X_2[k]$ indicates a signal of the second sensing signal flow on the $k^{th}$ subcarrier, $\rho$ indicates the sampling value of the lowpass function $\theta_k(t)$ in the time unit for sending the sensing signal flow, and k is a positive integer.

In another possible implementation, a signal of the second sensing signal flow on a $k^{th}$ subcarrier is a constellation point closest to $\widetilde{X_2[k]}$ in the modulation constellation set, where $\widetilde{X_2[k]}$ satisfies the following relationship: $\dfrac{\widetilde{X_2[k]}}{X_1[k]} = e^{j\rho}$.

Herein, $X_1[k]$ indicates a signal of the first sensing signal flow on the $k^{th}$ subcarrier, $\rho$ indicates the sampling value of the lowpass function $\theta_k(t)$ in the time unit for sending the sensing signal flow, and k is a positive integer.

Optionally, in this embodiment of this application, that the second sensing signal flow may be determined based on the first sensing signal flow and the lowpass function $\theta_k(t)$ includes: The second sensing signal flow is determined based on the first sensing signal flow, the lowpass function $\theta_k(t)$, and a CSD matrix K.

For example, the second sensing signal flow is determined based on the first sensing signal flow, Ø, and K. Herein, Ø may be a diagonal matrix whose main diagonal elements are 1 and $e^{j\rho}$. $\rho$ indicates the sampling value of the lowpass function $\theta_k(t)$ in the time unit for sending the sensing signal flow, and k is a positive integer.

For example, the communication apparatus is the second node in the foregoing method embodiments, an apparatus including the second node, or a component that can be used in the second node. The communication module 610 is configured to receive at least two sensing signal flows in each of a plurality of time units. The at least two sensing signal flows include a signal of a first sensing signal flow after channel transmission and a signal of a second sensing signal flow after channel transmission, the first sensing signal flow is a random signal flow, and the second sensing signal flow is determined based on the first sensing signal flow and a lowpass function. The processing module 620 is configured to process the at least two sensing signal flows received in the plurality of time units, to determine a wireless sensing result.

For example, a modulus of the first sensing signal flow remains unchanged, and a phase changes with the time unit. In a constant modulus case, channel strength remains unchanged, and channel estimation performance is good, so that sensing precision can be improved.

In a possible implementation, the first sensing signal flow may be a random scalar whose modulus is any positive number and whose phase is evenly distributed from 0 to $2\pi$. The first sensing signal flow and the second sensing signal flow are flexible, so that the modulus of the first sensing signal flow remains unchanged and the phase changes with the time unit. In a constant modulus case, channel strength remains unchanged, and channel estimation performance is good, so that sensing precision can be improved, and privacy of the authorized user can be protected.

In another possible implementation, the first sensing signal flow may be a point in a modulation constellation set. In this implementation, the first sensing signal flow is selected from a finite set, and has low implementation complexity.

Optionally, the modulation constellation set may be a constant-modulus modulation constellation set, for example, may be a PSK constellation set, for example, 8PSK, 16PSK, or 64PSK. When constant-modulus modulation is performed on the point in the modulation constellation set, an increase in a modulation order does not affect sensing precision. In this case, a "key space" may be increased by increasing a modulation order of the modulation constellation set, so that it is difficult for unauthorized users to obtain sensing information, and user privacy is protected. The modulation constellation set may alternatively be a QAM constellation set, for example, 16QAM or 64QAM. This is not limited in embodiments of this application.

Optionally, in this embodiment of this application, the second sensing signal flow may be determined based on the first sensing signal flow and a lowpass function $\theta_k(t)$. The lowpass function $\theta_k(t)$ may also be referred to as a time-varying function or a time-varying function that slowly changes with time. This is not specifically limited in embodiments of this application.

For example, a phase of the second sensing signal flow is determined based on a sampling value of the lowpass function $\theta_k(t)$ in a time unit for sending a sensing signal flow, and a modulus of the second sensing signal flow is equal to the modulus of the first sensing signal flow.

In a possible implementation, the first sensing signal flow and the second sensing signal flow in this embodiment of this application satisfy the following relationship: $\dfrac{X_2[k]}{X_1[k]} = e^{j\rho}$ .

Herein, $X_1[k]$ indicates a signal of the first sensing signal flow on a $k^{th}$ subcarrier, $X_2[k]$ indicates a signal of the second sensing signal flow on the $k^{th}$ subcarrier, $\rho$ indicates the sampling value of the lowpass function $\theta_k(t)$ in the time unit for sending the sensing signal flow, and k is a positive integer.

In another possible implementation, a signal of the second sensing signal flow on a $k^{th}$ subcarrier is a constellation point closest to $\widetilde{X_2[k]}$ in the modulation constellation set, where $\widetilde{X_2[k]}$ satisfies the following relationship: $\dfrac{\widetilde{X_2[k]}}{X_1[k]} = e^{j\rho}$ .

Herein, $X_1[k]$ indicates a signal of the first sensing signal flow on the $k^{th}$ subcarrier, $\rho$ indicates the sampling value of the lowpass function $\theta_k(t)$ in the time unit for sending the sensing signal flow, and k is a positive integer.

Optionally, in this embodiment of this application, that the second sensing signal flow may be determined based on the first sensing signal flow and the lowpass function $\theta_k(t)$ includes: The second sensing signal flow is determined based on the first sensing signal flow, the lowpass function $\theta_k(t)$, and a CSD matrix K.

For example, the second sensing signal flow is determined based on the first sensing signal flow, Ø, and K. Herein, Ø may be a diagonal matrix whose main diagonal elements are 1 and $e^{j\rho}$. $\rho$ indicates the sampling value of the lowpass function $\theta_k(t)$ in the time unit for sending the sensing signal flow, and k is a positive integer.

In this application, the communication apparatus 600 is presented in a form of functional modules obtained through division in an integrated manner. The "module" herein may be an ASIC, a circuit, a processor that executes one or more software or firmware programs, a memory, an integrated logic circuit, and/or another component capable of providing the foregoing functions.

In some embodiments, in terms of hardware implementation, a person skilled in the art may figure out that the communication apparatus 700 may be in the form of the communication apparatus 630 shown in FIG. 6.

In some embodiments, in this embodiment of this application, when the communication apparatus 600 may be a chip or a chip system in the first node or the second node, the communication module 610 may be an interface circuit, a pin, or the like. Specifically, the interface circuit may include an input circuit and an output circuit, and the processing module 620 may include a processing circuit.

In some embodiments, in this embodiment of this application, when the communication apparatus 600 may be a chip or a chip system in the first node or the second node, a function/implementation process of the communication module 610 may be implemented through an input/output interface (or a communication interface) of the chip or the chip system, and a function/implementation process of the processing module 620 may be implemented through a processor (or a processing circuit) of the chip or the chip system.

The communication apparatus 600 provided in this embodiment may perform the foregoing wireless sensing method. Therefore, for technical effects that can be achieved by the communication apparatus, refer to the foregoing method embodiments. Details are not described herein again.

In a possible product form, the first node or the second node in embodiments of this application may alternatively be implemented by using the following: one or more field programmable gate arrays (field programmable gate arrays, FPGAs), a programmable logic device (programmable logic device, PLD), a controller, a state machine, gate logic, a discrete hardware component, any other appropriate circuit, or any combination of circuits that can perform the various functions described in this application.

In another possible product form, the first node or the second node in embodiments of this application may be implemented by using a general bus architecture. For ease of description, FIG. 7 is a diagram of a structure of a communication apparatus 700 according to an embodiment of this application. The communication apparatus 700 includes a processor 701 and one or more transceivers 702 (one transceiver is used as an example for illustration in FIG. 7). Certainly, FIG. 7 shows only main components of the communication apparatus 700. In addition to the processor 701 and the transceiver 702, the communication apparatus may further include a memory 703.

Optionally, the processor 701 may be a general-purpose central processing unit (central processing unit, CPU), a microprocessor, an application-specific integrated circuit (application-specific integrated circuit, ASIC), one or more integrated circuits configured to control program execution in the solutions of this application, or a processing core configured to process data (for example, computer program instructions). The processor may be a single-core (single-CPU) processor, or may be a multi-core (multi-CPU) processor.

During specific implementation, in an embodiment, the processor 701 may include one or more CPUs.

Optionally, the processor 701, the transceiver 702, and the memory 703 may be connected through a communication bus. The communication bus may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one bold line is used for representation in FIG. 7, but this does not mean that there is only one bus or only one type of bus. The communication bus is configured to connect different components in the communication apparatus 700, so that the different components in the communication apparatus 700 may communicate and interact with each other.

Optionally, the transceiver 702, also referred to as a communication interface, may be a transceiver module configured to communicate with another device or a communication network. The communication network may be, for example, Ethernet (Ethernet), RAN, or WLAN. For example, the transceiver 702 may be an apparatus like a transceiver machine. Alternatively, the transceiver 702 may be a transceiver circuit inside the processor 301, to implement signal input and output of the processor.

Optionally, the memory 703 may be an apparatus having a storage function, for example, may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or other optical disk storage, optical disc storage (including a compressed optical disc, a laser disc, an optical disc, a digital versatile disc, a Blu-ray disc, or the like), a magnetic disk storage medium or another magnetic storage device, or any other medium that can be used to carry or store expected program code in a form of instruction or data structure and that can be accessed by a computer, but is not limited thereto. The memory may exist independently, and is connected to the processor 701 through a communication bus. The memory may alternatively be integrated with the processor.

Although not shown, during specific implementation, in an embodiment, the communication apparatus 700 may further include an output device and an input device. The output device communicates with the processor 701, and may display information in a plurality of manners. For example, the output device may be a liquid crystal display (liquid crystal display, LCD), a light-emitting diode (light-emitting diode, LED) display device, a cathode ray tube (cathode ray tube, CRT) display device, a projector (projector), or the like. The input device communicates with the processor 701, and may receive an input of a user in a plurality of manners. For example, the input device may be a mouse, a keyboard, a touchscreen device, or a sensor device.

Optionally, the processor 701 is mainly configured to: process a communication protocol and communication data, control the entire communication apparatus 700, execute a software program, and process data of the software program. The memory 703 is mainly configured to store the software program and data. The transceiver 702 may include a radio frequency circuit and an antenna. The radio frequency circuit is mainly configured to perform conversion between a baseband signal and a radio frequency signal and process the radio frequency signal. The antenna is mainly configured to receive and send a radio frequency signal in a form of an electromagnetic wave.

In an implementation, after the communication apparatus 700 is powered on, the processor 701 may read the software program in the memory 703, interpret and execute instructions of the software program, and process data of the software program. When data needs to be sent wirelessly, the processor 701 performs baseband processing on the to-be-sent data, and then outputs a baseband signal to the radio frequency circuit. The radio frequency circuit performs radio frequency processing on the baseband signal, and then sends a radio frequency signal in an electromagnetic wave form through the antenna. When the data is sent to the communication apparatus 700, the radio frequency circuit receives the radio frequency signal through the antenna, converts the radio frequency signal into a baseband signal, and outputs the baseband signal to the processor 701. The processor 701 converts the baseband signal into data and processes the data.

In another implementation, the radio frequency circuit and the antenna may be disposed independent of the processor that performs baseband processing. For example, in a distributed scenario, the radio frequency circuit and the antenna may be remotely disposed independent of the communication apparatus 700.

In an example, a function/implementation process of the processing module 620 in FIG. 6 may be implemented by the processor 701 in the communication apparatus 700 shown in FIG. 7 by invoking computer-executable instructions stored in the memory 703. A function/implementation process of the communication module 610 in FIG. 6 may be implemented by the transceiver 702 in the communication apparatus 700 shown in FIG. 7.

In some embodiments, an embodiment of this application further provides a communication apparatus. The communication apparatus includes a processor, configured to implement the method in any one of the foregoing method embodiments. The communication apparatus may be the first node or the second node in the foregoing method embodiments.

In a possible implementation, the communication apparatus further includes a memory. The memory is configured to store a necessary computer program and data. The computer program may include instructions. The processor may invoke the instructions in the computer program stored in the memory, to instruct the communication apparatus to perform the method in any one of the foregoing method embodiments. Certainly, the communication apparatus may not include a memory.

In another possible implementation, the communication apparatus further includes an interface circuit. The interface circuit is a code/data read/write interface circuit, and the interface circuit is configured to receive computer-executable instructions (where the computer-executable instructions are stored in a memory, and may be directly read from the memory, or may be read via another component) and transmit the computer-executable instructions to the processor.

In still another possible implementation, the communication apparatus further includes a communication interface, and the communication interface is configured to communicate with a module other than the communication apparatus.

It may be understood that the communication apparatus may be a chip or a chip system. When the communication apparatus is a chip system, the communication apparatus may include a chip, or may include a chip and another discrete component. This is not specifically limited in embodiments of this application.

This application further provides a computer-readable storage medium. The computer-readable storage medium stores a computer program or instructions. When the computer program or instructions are executed by a computer, functions in any one of the foregoing method embodiments are implemented.

Optionally, the computer-executable instructions in embodiments of this application may also be referred to as application program code. This is not specifically limited in embodiments of this application.

This application further provides a computer program product. When the computer program product is executed by a computer, functions in any one of the foregoing method embodiments are implemented.

A person of ordinary skill in the art may understand that, for the purpose of convenient and brief description, for a detailed working process of the foregoing system, apparatuses, and units, refer to a corresponding process in the foregoing method embodiment. Details are not described herein again.

It may be understood that the system, apparatus, and method described in this application may alternatively be implemented in another manner. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may be physically separated or not, this is, may be located together in the same place or distributed on a plurality of network units. Parts displayed as units may be or may be not physical units. A part or all of the units may be selected based on actual requirements to achieve the objectives of the solutions of embodiments.

In addition, functional units in embodiments of this application may be integrated into one processing module, each of the units may exist alone physically, or two or more units may be integrated into one unit.

All or a part of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When the computer program instructions are loaded and executed on a computer, all or a part of procedures (or functions) described in embodiments of this application are implemented. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like. In embodiments of this application, the computer may include the foregoing apparatuses.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of a plurality of. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the spirit and scope of this application. Correspondingly, the specification and accompanying drawings are merely example descriptions of this application defined by the accompanying claims, and are considered as any of or all modifications, variations, combinations or equivalents that cover the scope of this application. It is clear that a person skilled in the art can make various modifications and variations to this application without departing from the spirit and scope of this application. This application is intended to cover these modifications and variations of this application provided that these modifications and variations fall within the scope of protection defined by the following claims of this application and their equivalent technologies.

**Claims**

1. A wireless sensing method, comprising:

   generating at least two sensing signal flows, wherein the at least two sensing signal flows comprise a first sensing signal flow and a second sensing signal flow, the first sensing signal flow is a random signal flow, and the second sensing signal flow is determined based on the first sensing signal flow and a lowpass function; and
   outputting the at least two sensing signal flows in each of a plurality of time units.

2. A wireless sensing method, comprising:

   receiving at least two sensing signal flows in each of a plurality of time units, wherein the at least two sensing signal flows comprise a signal of a first sensing signal flow after channel transmission and a signal of a second sensing signal flow after channel transmission, the first sensing signal flow is a random signal flow, and the second sensing signal flow is determined based on the first sensing signal flow and a lowpass function; and
   processing the at least two sensing signal flows received in the plurality of time units, to determine a wireless sensing result.

3. The method according to claim 1 or 2, wherein a modulus of the first sensing signal flow remains unchanged, and a phase changes with the time unit.

4. The method according to claim 3, wherein
   the first sensing signal flow is a random scalar whose modulus is any positive number and whose phase is evenly distributed from 0 to $2\pi$.

5. The method according to claim 3 or 4, wherein
   the first sensing signal flow is a point in a modulation constellation set.

6. The method according to any one of claims 3 to 5, wherein
   a phase of the second sensing signal flow is determined based on a sampling value of the lowpass function in a time unit for sending a sensing signal flow, and a modulus of the second sensing signal flow is equal to the modulus of the first sensing signal flow.

7. The method according to any one of claims 3 to 6, wherein

   the second sensing signal flow and the first sensing signal flow satisfy the following relationship:

$$\frac{X_2[k]}{X_1[k]} = e^{j\rho},$$

wherein
$X_1[k]$ indicates a signal of the first sensing signal flow on a k$^{th}$ subcarrier, $X_2[k]$ indicates a signal of the second sensing signal flow on the k$^{th}$ subcarrier, $\rho$ indicates the sampling value of the lowpass function in the time unit for sending the sensing signal flow, and k is a positive integer.

8. The method according to any one of claims 3 to 6, wherein

a signal of the second sensing signal flow on a k$^{th}$ subcarrier is a constellation point closest to $\widetilde{X_2[k]}$ in the modulation constellation set, wherein $\widetilde{X_2[k]}$ satisfies the following relationship:

$$\frac{\widetilde{X_2[k]}}{X_1[k]} = e^{j\rho},$$

wherein
$X_1[k]$ indicates a signal of the first sensing signal flow on the k$^{th}$ subcarrier, $\rho$ indicates the sampling value of the lowpass function in the time unit for sending the sensing signal flow, and k is a positive integer.

9. The method according to any one of claims 3 to 6, wherein
the second sensing signal flow is determined based on the first sensing signal flow, the lowpass function, and a cyclic shift diversity CSD matrix K.

10. The method according to claim 9, wherein that the second sensing signal flow is determined based on the first sensing signal flow, the lowpass function, and the CSD matrix K comprises:
the second sensing signal flow is determined based on the first sensing signal flow, a randomization matrix Ø, and K, wherein Ø is a diagonal matrix whose main diagonal elements are 1 and $e^{j\rho}$, and $\rho$ indicates the sampling value of the lowpass function in the time unit for sending the sensing signal flow.

11. The method according to claim 9, wherein the second sensing signal flow satisfies the following relationship:

$$\begin{bmatrix} X_1[k] \\ X_2[k] \end{bmatrix} = \emptyset \times K \times \begin{bmatrix} X_1[k] \\ X_1[k] \end{bmatrix},$$

wherein
$X_1[k]$ indicates a signal of the first sensing signal flow on a k$^{th}$ subcarrier, and $X_2[k]$ indicates a signal of the second sensing signal flow on the k$^{th}$ subcarrier.

12. The method according to claim 9, wherein the second sensing signal flow satisfies the following relationship:

$$\begin{bmatrix} X_1[k] \\ X_2[k] \end{bmatrix} = K \times \emptyset \times \begin{bmatrix} X_1[k] \\ X_1[k] \end{bmatrix},$$

wherein
$X_1[k]$ indicates a signal of the first sensing signal flow on a k$^{th}$ subcarrier, and $X_2[k]$ indicates a signal of the second sensing signal flow on the k$^{th}$ subcarrier.

13. The method according to any one of claims 1 to 12, wherein a parameter of the lowpass function is determined by a group of random numbers and a public interpolation function, and the parameter is shared confidentially.

14. A communication apparatus, comprising:

a processing module, configured to generate at least two sensing signal flows, wherein the at least two sensing signal flows comprise a first sensing signal flow and a second sensing signal flow, the first sensing signal flow is a random signal flow, and the second sensing signal flow is determined based on the first sensing signal flow and a lowpass function; and
a communication module, configured to output the at least two sensing signal flows in each of a plurality of time units.

15. A communication apparatus, comprising:

a communication module, configured to receive at least two sensing signal flows in each of a plurality of time units, wherein the at least two sensing signal flows comprise a signal of a first sensing signal flow after channel transmission and a signal of a second sensing signal flow after channel transmission, the first sensing signal flow is a random signal flow, and the second sensing signal flow is determined based on the first sensing signal flow and a lowpass function; and
a processing module, configured to process the at least two sensing signal flows received in the plurality of time units, to determine a wireless sensing result.

16. The apparatus according to claim 14 or 15, wherein a modulus of the first sensing signal flow remains unchanged, and a phase changes with the time unit.

17. The method or the apparatus according to claim 16, wherein
the first sensing signal flow is a random scalar whose modulus is any positive number and whose phase is evenly distributed from 0 to $2\pi$.

18. The apparatus according to claim 16 or 17, wherein
the first sensing signal flow is a point in a modulation constellation set.

19. The apparatus according to any one of claims 16 to 18, wherein
a phase of the second sensing signal flow is determined based on a sampling value of the lowpass function in a time unit for sending a sensing signal flow, and a modulus of the second sensing signal flow is equal to the modulus of the first sensing signal flow.

20. The apparatus according to any one of claims 16 to 19, wherein

the second sensing signal flow and the first sensing signal flow satisfy the following relationship:

$$\frac{X_2[k]}{X_1[k]} = e^{j\rho},$$

wherein
$X_1[k]$ indicates a signal of the first sensing signal flow on a $k^{th}$ subcarrier, $X_2[k]$ indicates a signal of the second sensing signal flow on the $k^{th}$ subcarrier, $\rho$ indicates the sampling value of the lowpass function in the time unit for sending the sensing signal flow, and k is a positive integer.

21. The apparatus according to any one of claims 16 to 19, wherein

a signal of the second sensing signal flow on a $k^{th}$ subcarrier is a constellation point closest to $\widetilde{X_2[k]}$ in the modulation constellation set, wherein $\widetilde{X_2[k]}$ satisfies the following relationship:

$$\frac{\widetilde{X_2[k]}}{X_1[k]} = e^{j\rho},$$

wherein
$X_1[k]$ indicates a signal of the first sensing signal flow on the $k^{th}$ subcarrier, $\rho$ indicates the sampling value of the lowpass function in the time unit for sending the sensing signal flow, and k is a positive integer.

22. The apparatus according to any one of claims 16 to 19, wherein
the second sensing signal flow is determined based on the first sensing signal flow, the lowpass function, and a cyclic shift diversity CSD matrix K.

23. The apparatus according to claim 22, wherein that the second sensing signal flow is determined based on the first sensing signal flow, the lowpass function, and the CSD matrix K comprises:
the second sensing signal flow is determined based on the first sensing signal flow, a randomization matrix Ø, and K, wherein Ø is a diagonal matrix whose main diagonal elements are 1 and $e^{j\rho}$, and $\rho$ indicates the sampling value of the lowpass function in the time unit for sending the sensing signal flow.

24. The apparatus according to claim 23, wherein the second sensing signal flow satisfies the following relationship:

$$\begin{bmatrix} X_1[k] \\ X_2[k] \end{bmatrix} = \emptyset \times K \times \begin{bmatrix} X_1[k] \\ X_1[k] \end{bmatrix},$$

wherein
$X_1[k]$ indicates a signal of the first sensing signal flow on a $k^{th}$ subcarrier, and $X_2[k]$ indicates a signal of the second sensing signal flow on the $k^{th}$ subcarrier.

25. The apparatus according to claim 23, wherein the second sensing signal flow satisfies the following relationship:

$$\begin{bmatrix} X_1[k] \\ X_2[k] \end{bmatrix} = K \times \emptyset \times \begin{bmatrix} X_1[k] \\ X_1[k] \end{bmatrix},$$

wherein
$X_1[k]$ indicates a signal of the first sensing signal flow on a $k^{th}$ subcarrier, and $X_2[k]$ indicates a signal of the second sensing signal flow on the $k^{th}$ subcarrier.

26. The apparatus according to any one of claims 14 to 25, wherein a parameter of the lowpass function is determined by a group of random numbers and a public interpolation function, and the parameter is shared confidentially.

27. A communication apparatus, wherein the communication apparatus comprises a processor, and the processor is configured to run a computer program or instructions, or is configured to enable, using a logic circuit, the communication apparatus to perform the method according to any one of claims 1, and 3 to 13 or enable the communication apparatus to perform the method according to any one of claims 2, and 3 to 13.

28. The apparatus according to claim 27, wherein the apparatus further comprises a communication interface configured to input and/or output a signal.

29. The apparatus according to claim 27 or 28, wherein the apparatus further comprises a memory configured to store the computer program or instructions.

30. A computer-readable storage medium, wherein the computer-readable storage medium stores computer instructions or a program, and when the computer instructions or the program is run on a computer, the communication apparatus is enabled to perform the method according to any one of claims 1, and 3 to 13, or the communication apparatus is enabled to perform the method according to any one of claims 2, and 3 to 13.

31. A communication system, wherein the communication system comprises the communication apparatus according to any one of claims 14, and 16 to 26 and the communication apparatus according to any one of claims 15, and 16 to 26.

[FIG. 1]

First
node

Second
node

Another
device

[FIG. 2]

First node

Sensed object

Second node

[FIG. 3]

First node

Second node

S310: Generate a plurality of sensing signal flows

S320: Output the plurality of sensing signal flows in each of a plurality of time units

S330: Determine a wireless sensing result

[FIG. 4]

EP 4 716 263 A1

[FIG. 5]

[FIG. 6]

Processing module 610

Storage module 630

Communication module 620

Communication apparatus 600

[FIG. 7]

Communication apparatus 700

701

703

Processor

Instructions

Memory

Instructions

Transceiver

702

Radio frequency circuit

Antenna

## INTERNATIONAL SEARCH REPORT

| International application No. |
|---|
| **PCT/CN2023/101544** |

**A.    CLASSIFICATION OF SUBJECT MATTER**

H04W12/02(2009.01)i

According to International Patent Classification (IPC) or to both national classification and IPC

**B.    FIELDS SEARCHED**

Minimum documentation searched (classification system followed by classification symbols)

IPC:H04W,H04B,H04L

Documentation searched other than minimum documentation to the extent that such documents are included in the fields searched

Electronic data base consulted during the international search (name of data base and, where practicable, search terms used)

CNABS, CNTXT, VEN, WOTXT, EPTXT, USTXT, CNKI, baidu, 3GPP: 感知, 信道估计, 信号, 随机, 低通函数, 循环移位, 时间, 时隙, 导频, sensing, channel estimation, signal, random, lowpass function, cyclic shift, time, time slot, pilot

**C.    DOCUMENTS CONSIDERED TO BE RELEVANT**

| Category* | Citation of document, with indication, where appropriate, of the relevant passages | Relevant to claim No. |
|---|---|---|
| Y | CN 116032696 A (SHANGHAI HUAWEI TECHNOLOGIES CO., LTD.) 28 April 2023 (2023-04-28) description, paragraphs [0002]-[0110], and figures 1-10 | 1-31 |
| Y | CN 109120565 A (SHANGHAITECH UNIVERSITY et al.) 01 January 2019 (2019-01-01) description, paragraphs [0003]-[0087], and figures 1-3 | 1-31 |
| Y | CN 109842470 A (HUAWEI TECHNOLOGIES CO., LTD.) 04 June 2019 (2019-06-04) description, paragraphs [0005]-[0294] | 1-31 |
| Y | CN 114450905 A (HUAWEI TECHNOLOGIES CO., LTD.) 06 May 2022 (2022-05-06) description, paragraphs [0010]-[0244] | 1-31 |
| A | US 2009274356 A1 (THE UWM RESEARCH FOUNDATION, INC.) 05 November 2009 (2009-11-05) entire document | 1-31 |

☐ Further documents are listed in the continuation of Box C.          ☑ See patent family annex.

| | |
|---|---|
| *    Special categories of cited documents: | "T"  later document published after the international filing date or priority date and not in conflict with the application but cited to understand the principle or theory underlying the invention |
| "A"  document defining the general state of the art which is not considered to be of particular relevance | |
| "D"  document cited by the applicant in the international application | "X"  document of particular relevance; the claimed invention cannot be considered novel or cannot be considered to involve an inventive step when the document is taken alone |
| "E"  earlier application or patent but published on or after the international filing date | |
| "L"  document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O"  document referring to an oral disclosure, use, exhibition or other means | "&"  document member of the same patent family |
| "P"  document published prior to the international filing date but later than the priority date claimed | |

| Date of the actual completion of the international search | Date of mailing of the international search report |
|---|---|
| **27 February 2024** | **29 February 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/101544**

| Patent document cited in search report | | | Publication date (day/month/year) | Patent family member(s) | | | Publication date (day/month/year) |
|---|---|---|---|---|---|---|---|
| CN | 116032696 | A | 28 April 2023 | None | | | |
| CN | 109120565 | A | 01 January 2019 | None | | | |
| CN | 109842470 | A | 04 June 2019 | WO | 2019100905 | A1 | 31 May 2019 |
| CN | 114450905 | A | 06 May 2022 | WO | 2021056189 | A1 | 01 April 2021 |
| | | | | CN | 114450905 | B | 29 December 2023 |
| US | 2009274356 | A1 | 05 November 2009 | US | 8170311 | B2 | 01 May 2012 |

Form PCT/ISA/210 (patent family annex) (July 2022)